# FASCICULE DE BREVET EUROPEEN

(11) **EP 4 058 721 B1**
(45) Date de publication et mention de la délivrance du brevet: **28.02.2024**
(21) Numéro de dépôt: 20803616.0
(22) Date de dépôt: 13.11.2020
(51) Int. Cl.: F21S 43/20, F21S 43/14, G02B 19/00, B60Q 1/26, B60R 1/12, F21S 41/25, G02B 3/04, B60Q 1/24, B60Q 1/00

(54) **MODULE D'ÉCLAIRAGE POUR PARTIE LATÉRALE D'UN VÉHICULE**
BELEUCHTUNGSMODUL FÜR EIN SEITENTEIL EINES FAHRZEUGS
LIGHTING MODULE FOR LATERAL PART OF A VEHICLE

(30) Priorité: 15.11.2019 FR 1912758; 16.12.2019 FR 1914549
(43) Date de publication de la demande: 21.09.2022
(73) Titulaire: Valeo Vision, 93012 Bobigny Cedex (FR)
(72) Inventeur: BEEV, Kostadin, 93012 Bobigny Cedex (FR); MEYRENAUD, Jean Luc, 93012 Bobigny Cedex (FR); XUE, Jingjing, 93012 Bobigny Cedex (FR); ANDRE, Stephane, 93012 Bobigny Cedex (FR); PELLARIN, Marie, 93012 Bobigny Cedex (FR)
(74) Mandataire: Valeo Visibility
(86) Numéro de dépôt international: PCT/EP2020/082121
(87) Numéro de publication internationale: WO 2021/094574

(56) Documents cités:
- EP-A1- 0 945 306
- EP-A1- 2 935 982
- WO-A1-2019/150011
- CN-U- 201 599 722
- CN-U- 201 875 628
- CN-U- 202 613 315
- DE-A1-102015 009 875
- DE-A1-102017 007 761
- DE-A1-102018 201 043
- FR-A1- 2 614 969
- FR-A1- 2 639 294
- US-A1- 2002 041 498
- US-A1- 2007 029 563
- US-A1- 2011 235 338
- US-A1- 2011 320 024
- US-A1- 2012 229 645
- US-A1- 2018 172 238
- US-B2- 8 840 270

## Description

L'invention concerne un module d'éclairage pour l'éclairage des zones latérales d'un véhicule. Elle porte aussi sur un rétroviseur latéral, un dispositif d'assistance et un véhicule en tant que tels comprenant au moins un tel module d'éclairage. Elle porte enfin sur un procédé d'assistance à la conduite d'un véhicule automobile utilisant au moins un tel module d'éclairage.

Avec le développement du véhicule automobile autonome, il devient nécessaire d'améliorer l'assistance à la conduite, dans toutes les conditions d'éclairage, notamment pour gérer différentes fonctions particulières de conduite parmi lesquelles :
- le maintien sur une voie, aussi dénommé par l'appellation anglo-saxonne « lane keeping », pour permettre à un véhicule de suivre sa voie sur une route, notamment en détectant et signalant au conducteur toute déviation de trajectoire ;
- le centrage sur une voie, aussi dénommé par l'appellation anglo-saxonne « lane centering », qui vient en complément de la fonction précédente, et permet plus précisément de maintenir le véhicule de manière autonome au centre de sa voie,
- le changement de voie, aussi dénommé par l'appellation anglo-saxonne « lane changing », pour permettre à un véhicule de changer de voie, par exemple en vue d'un dépassement,
- le freinage d'urgence, aussi dénommé par l'appellation anglo-saxonne « automating emergency breaking », ou plus simplement par le sigle AEB,
- la manoeuvre d'évitement d'urgence, aussi dénommé par l'appellation anglo-saxonne « automating emergency steering », ou plus simplement par le sigle AES, qui permet d'éviter un obstacle présent sur sa voie,
- l'assistance au parking, et le parking autonome.

Dans ces différentes fonctions, le dispositif d'assistance a besoin de recevoir des informations en entrée, parmi lesquelles notamment la détection des marquages au sol, comme les lignes délimitant les voies, et/ou la présence des éventuels obstacles sur la route. Cette détection doit pouvoir être réalisée dans toutes les conditions, et notamment la nuit.

En remarque, l'éclairage existant sur un véhicule permet d'éclairer la route devant le véhicule à partir d'une distance de deux mètres sur sa propre voie et de cinq mètres sur les voies adjacentes.

Cependant, l'éclairage de la partie latérale du véhicule est plus délicate car l'éclairage doit couvrir l'intégralité d'une surface rectangulaire adjacente au véhicule, s'étendant depuis quelques centimètres du véhicule à plusieurs mètres et s'étendant sur une longueur d'une dizaine de mètres. L'étendue angulaire de cette zone à éclairer rend très difficile l'éclairage de toute cette surface de manière homogène. Le document WO2019150011 A1 montre par exemple un dispositif permettant d'éclairer le sol à proximité des portes latérales du véhicule. Le document US2007029563 A1 montre une diode électroluminescente pour lampe de véhicule, comprenant une lentille avec une surface avant courbée permettant d'obtenir une distribution de luminance sensiblement uniforme. D'autre part, il est naturellement interdit d'éblouir les véhicules adjacents.

Ces contraintes font qu'il est aujourd'hui délicat, voire impossible, de pouvoir détecter certains marquages au sol ou obstacles à proximité d'un véhicule, notamment dans les régions latérales, ce qui ne permet pas d'offrir un dispositif d'assistance remplissant les fonctions susmentionnées nécessaires à un véhicule autonome.

De plus, la silhouette d'un véhicule est également très importante à la fois pour son esthétisme et son aérodynamisme. Les modules d'éclairage d'un véhicule automobile ne doivent pas altérer sa silhouette extérieure. Ils doivent donc être peu encombrants pour mettre leur intégration discrète et esthétique dans un véhicule automobile.

Le but de l'invention est de fournir une solution d'éclairage d'une région latérale d'un véhicule remédiant aux inconvénients ci-dessus et améliorant les dispositifs et procédés d'assistance à la conduite d'un véhicule automobile, lui permettant notamment de remplir les fonctions d'assistance explicitées ci-dessus, pour être apte à l'assistance d'un véhicule autonome.

En complément, le but de l'invention est de fournir une solution d'éclairage et d'assistance à la conduite d'un véhicule automobile simple, offrant un éclairage performant, sans surcoût trop important et fiable.

A cet effet, l'invention porte sur un module d'éclairage pour l'éclairage des zones latérales d'un véhicule comprenant une source de lumière et une lentille comprenant un dioptre d'entrée orienté vers la source de lumière et un dioptre de sortie, caractérisé en ce que le dioptre de sortie comprend au moins une section par un plan horizontal comprenant deux portions convexes séparées par une portion concave, vues depuis un côté opposé à la source de lumière, et en ce que le dioptre d'entrée comprend une section par un plan médian vertical présentant une portion inférieure convexe et une portion supérieure concave, vues depuis un côté opposé à la source de lumière. Lesdites portions convexes et concave de ladite section du dioptre de sortie par un plan horizontal peuvent présenter une forme arrondie, notamment en portion de cercle, et/ou une succession de portions linéaires, notamment deux portions convexes arrondies séparées par une portion concave formant un angle aigu ou de faible rayon de courbure, et/ou lesdites portions convexe et concave de ladite section du dioptre d'entrée par un plan médian vertical peuvent présenter une forme arrondie, notamment en portion de cercle, et/ou une succession de portions linéaires.

Le dioptre d'entrée peut comprendre au moins une section par un plan horizontal de forme en portion de cercle centrée sur la source de lumière ou la surface du dioptre d'entrée peut être formée par la rotation de ladite section par un plan médian vertical autour d'un axe de rotation vertical passant au niveau de la source de lumière.

Le dioptre de sortie peut comprendre une section par un plan médian vertical présentant une forme au moins partiellement en portion de cercle centrée sur la source de lumière, ou peut comprendre plusieurs sections par des plans verticaux comprenant la source de lumière présentant une forme au moins partiellement en portion de cercle centrée sur la source de lumière.

Toutes les sections par un plan horizontal du dioptre de sortie peuvent présenter deux portions convexes séparées par une portion concave ou les sections horizontales du dioptre de sortie peuvent présenter deux portions convexes séparées par une portion concave sur au moins la moitié ou au moins les trois quarts de la hauteur de la lentille.

La surface du dioptre de sortie peut s'étendre dans au moins un plan vertical de manière arrondie, voire en portion de cercle, jusqu'à une extrémité inférieure sensiblement positionnée au niveau d'un plan vertical longitudinal passant par la source de lumière, et/ou la surface du dioptre de sortie peut s'étendre dans au moins un plan horizontal jusqu'à une ou deux extrémités sensiblement positionnées au niveau d'un plan vertical longitudinal passant par la source de lumière.

La lentille peut comprendre une surface supérieure réfléchissante pour réfléchir les rayons lumineux provenant de la source de lumière vers l'intérieur de la lentille.

Le module d'éclairage peut présenter une forme répartie symétriquement autour d'un plan médian vertical.

Le module d'éclairage peut comprendre une longueur inférieure ou égale à 50 mm, voire inférieure ou égale à 45 mm, et/ou peut comprendre une largeur inférieure ou égale à 15 mm, voire inférieure ou égale à 13 mm, et/ou peut comprendre une hauteur inférieure ou égale à 20 mm, voire inférieure ou égale à 15 mm.

**Le module d'éclairage peut comprendre** un premier écran positionné d'un premier côté de la source de lumière, un deuxième écran positionné d'un deuxième côté de la source de lumière, le deuxième côté étant opposé au premier côté par rapport à la source de lumière, le premier écran étant destiné à s'étendre sensiblement parallèlement à un plan vertical et transversal, à l'avant de la source de lumière et à hauteur de la source de lumière, le deuxième écran étant destiné à s'étendre sensiblement parallèlement à un plan vertical et transversal, à l'arrière de la source de lumière et à hauteur de la source de lumière, le premier écran comprenant une surface réfléchissante pour réfléchir des rayons lumineux issus de la source de lumière vers le deuxième côté de ladite zone latérale et/ou le deuxième écran comprenant une surface réfléchissante pour réfléchir des rayons lumineux issus de la source de lumière vers le premier côté de ladite zone latérale.

Le module d'éclairage peut comprendre un troisième écran s'étendant entre le premier écran et le deuxième écran, le troisième écran étant destiné à s'étendre sensiblement horizontalement et au-dessus de la source de lumière.

Le premier écran peut s'étendre globalement dans un premier plan et le deuxième écran peut s'étendre globalement dans un deuxième plan, le premier plan et le deuxième plan formant un angle non nul, notamment un angle compris entre 0° et 50°.

Le premier écran et le deuxième écran peuvent être obtenus par injection plastique.

La surface réfléchissante du premier écran et/ou la surface réfléchissante du deuxième écran peuvent être obtenues par un dépôt métallique, notamment par aluminisation.

La surface réfléchissante du premier écran et/ou la surface réfléchissante du deuxième écran peut comprendre un ou plusieurs reliefs.

L'invention porte aussi sur un rétroviseur latéral pour un véhicule automobile, caractérisé en ce qu'il comprend un module d'éclairage selon tel que décrit précédemment, le rétroviseur latéral comprenant un miroir d'observation ou une caméra pour permettre à un conducteur de visualiser la zone à l'arrière d'un véhicule automobile, le module d'éclairage étant positionné verticalement sous le miroir d'observation ou sous la caméra.

Le rétroviseur latéral peut comprendre un boîtier supportant le miroir d'observation, la longueur du boîtier étant supérieure ou égale à la longueur du module d'éclairage et/ou la largeur du boîtier étant supérieure ou égale à la largeur du module d'éclairage.

Le boîtier peut supporter un miroir d'observation, le boîtier formant avec le premier écran et/ou avec le deuxième écran un ensemble monobloc.

L'invention porte aussi sur un dispositif d'assistance à la conduite, caractérisé en ce qu'il comprend au moins un module d'éclairage tel que décrit précédemment et/ou un rétroviseur latéral tel que décrit ci-dessus afin d'éclairer la zone latérale d'un véhicule automobile, en ce qu'il comprend au moins une caméra pour visualiser ladite zone latérale éclairée, et en ce qu'il comprend de plus une unité centrale comprenant un dispositif matériel et/ou logiciel exploitant les données transmises par ladite au moins une caméra pour calculer et transmettre des données d'assistance à la conduite à un véhicule.

L'invention porte aussi sur un véhicule automobile, notamment autonome ou semi-autonome, caractérisé en ce qu'il comprend un ou plusieurs modules d'éclairage tels que décrits précédemment, agencés en partie basse et latérale du véhicule automobile ou au niveau d'un rétroviseur du véhicule ou en ce qu'il comprend un dispositif d'assistance à la conduite tel que décrit ci-dessus.

L'invention porte aussi sur un procédé d'assistance à la conduite d'un véhicule automobile, caractérisé en ce qu'il comprend les étapes suivantes:
- Eclairage d'une zone latérale d'un véhicule à l'aide d'au moins un module d'éclairage tel que décrit précédemment, agencé(s) en partie latérale du véhicule automobile ;
- Visualisation de ladite zone latérale éclairée à l'aide d'au moins une caméra agencée sur le véhicule automobile, et transmission des données visualisées par la caméra vers une unité centrale du véhicule automobile ;
- Analyse desdites données reçues par l'unité centrale, notamment détection d'obstacles, et déduction d'instructions d'assistance à la conduite ;
- Transmission de données d'assistance à la conduite à un dispositif de conduite autonome et/ou à une interface homme machine du véhicule automobile.

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 représente schématiquement une vue en perspective d'un module d'éclairage selon un mode de réalisation de l'invention.
[Fig. 2] La figure 2 représente schématiquement une vue en perspective de dessous d'un module d'éclairage selon le mode de réalisation de l'invention.
[Fig. 3] La figure 3 représente schématiquement une vue en perspective de face d'un module d'éclairage selon le mode de réalisation de l'invention.
[Fig. 4] La figure 4 représente schématiquement une vue en perspective de côté d'un module d'éclairage selon le mode de réalisation de l'invention.
[Fig. 5] La figure 5 représente une vue schématique en coupe selon un plan horizontal du module d'éclairage selon le mode de réalisation de l'invention.
[Fig. 6] La figure 6 représente une vue schématique en coupe selon un plan médian vertical du module d'éclairage selon le mode de réalisation de l'invention.
[Fig. 7] La figure 7 représente une vue de dessus d'un véhicule équipé de modules d'éclairage selon le mode de réalisation de l'invention.
[Fig. 8] La figure 8 représente schématiquement une vue de dessus un véhicule automobile selon un mode de réalisation de l'invention.
[Fig. 9] La figure 9 représente une vue en perspective de face d'un module d'éclairage selon un mode de réalisation de l'invention.
[Fig. 10] La figure 10 représente une vue schématique en coupe du module d'éclairage selon un plan médian vertical et longitudinal.
[Fig. 11] La figure 11 représente schématiquement en vue de dessus le véhicule automobile et une zone d'éclairage produite par le module d'éclairage.
[Fig. 12] La figure 12 représente une vue schématique en coupe d'un module d'éclairage selon une variante de réalisation de réalisation de l'invention selon un plan médian vertical et longitudinal.
[Fig. 13] La figure 13 représente schématiquement en vue de dessus le véhicule automobile et une zone d'éclairage produite par le module d'éclairage selon la variante de réalisation.

Par convention, nous utiliserons par la suite les trois directions x, y, z d'abord comme référentiel d'un module d'éclairage seul. La direction y sera appelée direction longitudinale, et correspond à la direction selon la plus grande longueur du module d'éclairage, la direction x la direction transversale, et la direction z la direction verticale. Ces directions sont choisies en relation avec la géométrie particulière du module d'éclairage, qui sera décrit ultérieurement. Ces directions sont aussi choisies en complément en référence à un véhicule sur lequel le module d'éclairage est susceptible d'être positionné, au niveau d'un flanc latéral, pour procéder à l'éclairage de la zone latérale dudit véhicule automobile, ce véhicule étant lui-même positionné sur un plan horizontal. Dans un exemple d'implémentation particulier, la direction longitudinale y du module d'éclairage correspond à la direction orientée de l'arrière vers l'avant du véhicule automobile, donc à la direction longitudinale du véhicule. De plus, la direction x correspond à la direction orientée de la gauche vers la droite du véhicule. Enfin, la direction z correspond à la direction verticale. En résumé, les directions x, y, z sont donc aussi définies de manière étendue par rapport à un véhicule automobile, dans une configuration d'alignement particulier du module d'éclairage avec le véhicule. Les adjectifs « supérieur » ou « haut » et « inférieur » ou « bas » seront utilisés en référence à la direction verticale définie ci-dessus. Les adjectifs « inférieur » ou « bas » feront ainsi référence à des éléments positionnés ou destinés à être positionnés du côté d'un sol à éclairer.

D'autre part, nous utiliserons par convention les adjectifs « convexe » et « concave » pour qualifier les éléments optiques de l'invention en se positionnant depuis une vision extérieure à un véhicule automobile, opposée au côté où une source de lumière est destinée à être positionnée relativement auxdits éléments optiques pour coopérer avec eux.

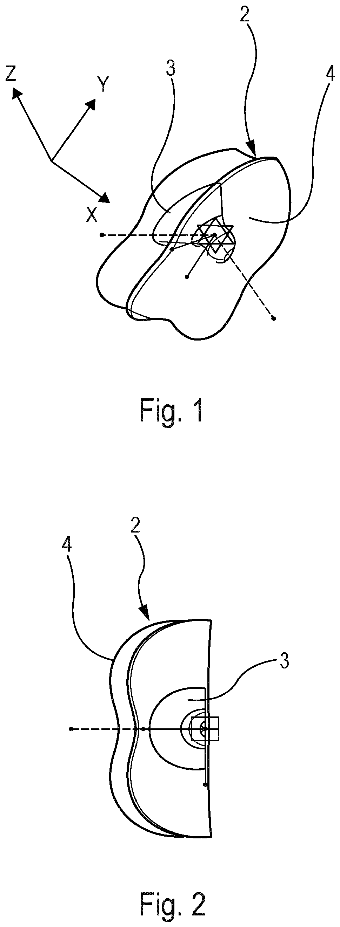

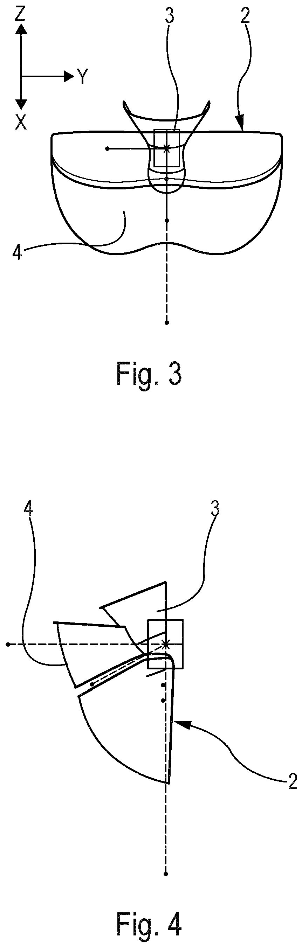

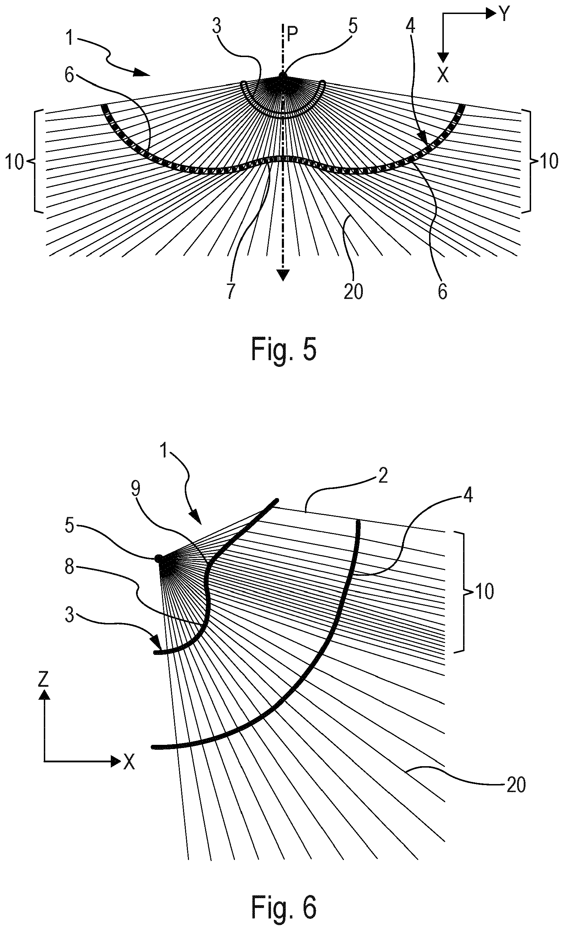

Les figures 1 à 4 illustrent selon plusieurs vues une lentille 2 d'un module d'éclairage 1 selon un mode de réalisation de l'invention. Comme cela apparaît sur la figure 1, la lentille 2 présente une forme tridimensionnelle s'approchant globalement d'une cacahuète. Elle s'étend en longueur selon une direction longitudinale y, destinée à coïncider avec la direction longitudinale d'un véhicule sur lequel elle serait montée. Elle s'étend en hauteur selon une direction verticale z, destinée à coïncider avec la direction verticale d'un véhicule sur lequel elle serait montée. Elle comprend enfin une troisième direction transversale x, perpendiculaire aux deux directions précédentes. La lentille 2 présente une forme sensiblement symétrique par rapport à un plan transversal vertical xz, qui sera appelé plan médian vertical P, plus particulièrement représenté sur la figure 5.

La lentille 2 comprend un dioptre d'entrée 3 et un dioptre de sortie 4. Le module d'éclairage 1 selon le mode de réalisation comprend de plus au moins une source de lumière 5, agencée pour émettre de la lumière vers le dioptre d'entrée 3 de la lentille 2. Le dioptre de sortie 4 oriente ensuite ces rayons lumineux vers l'extérieur, de sorte à éclairer la zone ciblée. Selon le mode de réalisation, le dioptre d'entrée 3 et le dioptre de sortie 4 comprennent des formes particulières, qui seront précisées en référence avec les figures 5 et 6, conçues pour permettre l'éclairage performant de la zone latérale d'un véhicule automobile, à proximité d'un véhicule automobile, pour respecter la zone d'éclairage ciblée et rappelée précédemment.

En complément, la lentille 2 est conçue de sorte à permettre la réalisation d'un module d'éclairage de faible encombrement. A titre d'exemple, la distance séparant la source de lumière 5 du dioptre d'entrée 3 peut être inférieure ou égale à 10 mm, voire inférieure ou égale à 3 mm. Préférentiellement, la source de lumière 5 est accolée au dioptre d'entrée 3. Alternativement, le dioptre d'entrée 3 peut former une cavité recevant au moins partiellement la source de lumière 5. D'autre part, la lentille comprend globalement une longueur (selon l'axe y) inférieure ou égale à 50 mm, de préférence comprise entre 24 et 45 mm, une largeur (selon l'axe x) inférieure ou égale à 15 mm, de préférence comprise entre 10 et 15 mm, et une hauteur (selon l'axe z) inférieure ou égale à 20 mm, de préférence comprise entre 5 et 15 mm. La lentille se présente de préférence d'une seule pièce. Elle est monobloc. Elle peut notamment se présenter dans un matériau plastique.

La source de lumière 5 peut comprendre une diode électroluminescente. Pour simplifier la description, nous considérerons par la suite la présence d'une seule source de lumière, sachant qu'elle pourrait être en pratique formée par la réunion de plusieurs sources de lumière distinctes. Cette source de lumière peut émettre toute lumière, par exemple une lumière blanche et/ou à infrarouge proche.

La figure 5 illustre schématiquement le module d'éclairage 1 selon le mode de réalisation en coupe par un plan horizontal xy, sensiblement au milieu de la hauteur de la lentille 2. Cette coupe illustre la source de lumière 5, centrée relativement au dioptre d'entrée 3, dont la section horizontale présente une forme sensiblement circulaire, s'entendant en portion de cercle, convexe (considérée depuis le côté opposé à la source de lumière 5). Les rayons lumineux 20 issus de la source lumineuse 5 ne sont ainsi sensiblement pas déviés par le dioptre d'entrée 3 dans ce plan horizontal. Le dioptre de sortie 4 présente une section horizontale de forme sensiblement en W, présentant deux portions convexes 6 séparées par une portion concave 7 (cette convexité étant considérée depuis le côté opposée à la source de lumière 5). Cette forme est sensiblement symétrique relativement au plan médian vertical P. Les trois portions convexes 6 et concave 7 représentent chacune sensiblement une portion de cercle. En variante, elles pourraient être former par une ou plusieurs portions linéaires, formant des angles entre elles.

Avantageusement, toutes les sections horizontales des deux dioptres 3, 4 de la lentille 2 présenteront les mêmes caractéristiques, telles que décrite ci-dessus, sur toute la hauteur (selon la direction verticale z) de la lentille 2. En variante, seule une partie de ces sections, s'étendant de préférence sur au moins la moitié de la hauteur de la lentille 2, voire sur au moins les trois quarts de la hauteur de la lentille 2, présenteront ces caractéristiques.

Le module d'éclairage est destiné à un montage sur une partie latérale d'un véhicule automobile, notamment selon une orientation avantageuse faisant coïncider le repère x, y, z de la lentille 2, défini précédemment, avec les directions respectives transversale, longitudinale, et verticale d'un véhicule automobile, comme cela a été évoqué précédemment. Pour la suite de la description, nous considérons cette orientation particulière de la lentille 2 relativement à un véhicule sur lequel elle est montée. Lors du montage du module d'éclairage 1 sur un flanc latéral d'un véhicule, la source de lumière 5 est destinée à un positionnement du côté d'un véhicule, alors que le dioptre de sortie 4 se trouve vers l'extérieur du véhicule, pour transmettre les rayons lumineux sur la zone à éclairer.

La forme particulière du dioptre de sortie 4 dans un plan horizontal permet une bonne répartition droite et gauche des rayons lumineux quittant le dioptre de sortie 4, c'est-à-dire une bonne répartition de l'éclairage selon la direction longitudinale y d'un véhicule automobile. La figure 5 illustre en effet une multitude de rayons lumineux 20 issus de la lentille 2. Il apparaît que ces rayons sont répartis sur une grande surface. Au niveau des extrémités du dioptre de sortie 4, les rayons lumineux présentent un angle relativement faible vis-à-vis de la direction longitudinale y, ce qui leur permet d'éclairer les parties arrière et avant à proximité d'un véhicule, dans la zone latérale d'un véhicule.

D'autre part, il apparaît que le dioptre de sortie 4 se comporte de manière semblable à un assemblage de deux dioptres disposés de part et d'autre du plan médian vertical P. En effet, deux zones 10 regroupent un éclairage maximal, qui correspondent finalement à deux axes optiques de la lentille 2. Ces zones 10 d'éclairage maximal (ou axes optiques) sont disposées selon des orientations de sensiblement 80 degrés relativement à la direction transversale x, plus généralement entre 50 et 85 degrés. Cette géométrie permet de répartir de manière sensiblement uniforme l'éclairage vers l'avant comme vers l'arrière d'un véhicule, tout en atteignant un éclairage satisfaisant sur toute une zone latérale de véhicule, sans zone sombre.

La figure 6 illustre schématiquement le module d'éclairage 1 selon le mode de réalisation en coupe par le plan médian vertical P xz susmentionné. Cette coupe illustre que le dioptre d'entrée 3 présente une section verticale de forme particulière, comprenant une portion inférieure convexe 8 et une portion supérieure concave 9. Ces deux portions sont arrondies. Elles se présentent sous la forme de portions sensiblement circulaires, c'est-à-dire en portions de cercle. La section verticale du dioptre de sortie 4 présente une forme convexe. Cette forme est sensiblement circulaire, centrée sur la source de lumière 5. Le dioptre de sortie 4 dévie peut les rayons lumineux dans le plan vertical.

Avantageusement, toutes les sections verticales des deux dioptres 3, 4 de la lentille 2 présenteront les mêmes caractéristiques, telles que décrite ci-dessus, par tout plan vertical comprenant la source de lumière 5. En remarque, la surface tridimensionnelle du dioptre d'entrée 3 est de préférence obtenue par la rotation autour d'un axe vertical comprenant la source de lumière 5. Cette rotation peut s'étendre sur environ 180 degrés, les extrémités se trouvant au niveau d'un plan longitudinal vertical comprenant la source de lumière 5. De plus toutes ces sections verticales du dioptre de sortie 4 présentent avantageusement une forme similaire, de rayon variable, pour former les variations représentées en figure 5. En variante, seule une partie de ces sections présenteront ces caractéristiques.

La forme particulière du dioptre d'entrée 3 dans un plan vertical tel que représenté permet une orientation globalement vers le bas des rayons lumineux 20 provenant de la source de lumière. Il transmet d'abord des rayons lumineux presque verticaux, à proximité immédiate du véhicule, par l'intermédiaire de la portion convexe 8 susmentionnée. Les rayons lumineux les plus hauts sont rabattus vers le bas, de sorte à ne pas éblouir un véhicule adjacent. La zone 10 d'éclairage maximal, c'est-à-dire l'axe optique de la lentille, formée par la portion concave 9, présente une inclinaison sous un plan horizontal calculée pour atteindre un éclairage à une distance latérale de quelques mètres, adaptée à la zone latérale ciblée. Cette inclinaison est de préférence comprise entre 5 et 20 degrés.

En complément, la surface supérieure de la lentille 2, c'est-à-dire la surface supérieure joignant le dioptre d'entrée 3 au dioptre de sortie 4, dans un plan vertical, présente avantageusement une surface réfléchissante, pour réfléchir les rayons lumineux vers le bas, à l'intérieur de la lentille 2, et éviter qu'ils ne sortent de la lentille 2 dans une direction qui pourrait être préjudiciable. Cette surface supérieure peut être sensiblement plane. Il peut s'agir d'un miroir, distinct de la lentille 2, positionné en partie supérieure de la lentille.

Ainsi, par la géométrie particulière de la lentille 2, le module d'éclairage 1 permet d'atteindre un éclairage optimal dans toutes les directions, avec une seule lentille de faible encombrement. Le module d'éclairage est ainsi parfaitement adapté pour son agencement sur une partie latérale d'un véhicule.

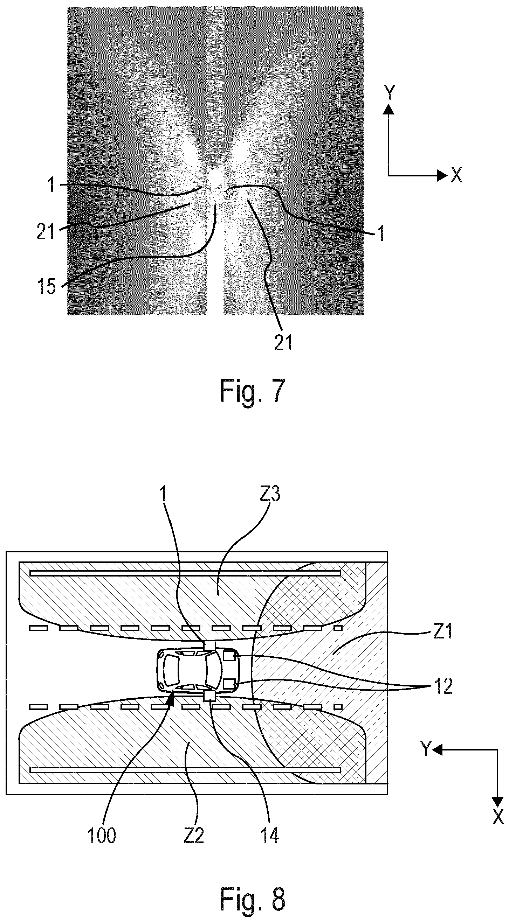

La figure 7 illustre ainsi un véhicule automobile 100 intégrant deux modules d'éclairage 1 selon le mode de réalisation de l'invention, un sur chaque côté. Dans une mode de réalisation, un module d'éclairage 1 est intégré dans la paroi d'un rétroviseur du véhicule. Un tel module d'éclairage 1 peut être positionné de sorte que sa direction longitudinale coïncide avec la direction longitudinale du véhicule automobile, comme mentionné précédemment. En variante, le véhicule pourrait comprendre plusieurs modules d'éclairage 1 de chaque côté, par exemple deux ou trois. Par cet agencement, les modules d'éclairage 1 permettent de former une zone latérale éclairée 21 telle que recherchée, c'est-à-dire suffisante pour un éclairage satisfaisant de la zone latérale d'un véhicule automobile, compatible avec une conduite autonome d'un tel véhicule. Ces modules d'éclairage sont donc conçus pour coopérer avec au moins une caméra agencée sur un véhicule automobile, permettant de visualiser ladite zone latérale éclairée 21.

Naturellement, en variante, les modules d'éclairage 1 selon l'invention pourraient être disposés différemment sur le côté d'un véhicule automobile. Ils pourraient être agencés entre les deux roues du véhicule, à tout niveau de la caisse du véhicule. De plus, en variante, le module d'éclairage peut être légèrement incliné relativement au véhicule automobile, c'est à dire que leurs repères respectifs x, y, z susmentionnés ne seraient plus superposés. Notamment, cette inclinaison peut être effectuée relativement à l'axe longitudinal y, de sorte à rabattre plus ou moins les rayons lumineux vers le sol. En variante ou complément, cette inclinaison peut être effectuée relativement à l'axe vertical z, selon un angle compris entre 1 et 45 degré, de préférence autour de 20 degrés, de sorte à orienter plus ou moins les rayons lumineux vers l'avant ou l'arrière du véhicule.

D'autre part, selon un mode de réalisation avantageux, une caméra peut être agencée à proximité immédiate d'un module d'éclairage selon l'invention.

Naturellement, l'invention ne se limite pas au mode de réalisation décrit. Notamment, le module d'éclairage 1 peut comprendre une lentille 2 dont la géométrie s'éloigne de celle représentée selon le mode de réalisation. Dans tous les cas, au moins une section horizontale de son dioptre de sortie 4 présente une double convexité, séparée par une concavité, et au moins la section par le plan médian vertical de son dioptre d'entrée 3 comprend une portion inférieure convexe, poursuivie vers le haut par une portion concave. Dans tous les cas, les formes concaves et convexes peuvent prendre d'autres formes que celles représentées, et/ou des rayons de courbure différents. Il est toutefois avantageux que tout ou partie de ces portions présentent une forme sensiblement arrondie, par exemple en portions de cercle. Certaines de ces portions pourraient en variante comprendre des parties planes, le ou les dioptres pouvant aussi comprendre des parties angulées. Par exemple, la section horizontale à double convexité du dioptre de sortie 4 peut présenter une frontière formant un angle aigu ou à faible rayon de courbure au niveau de la portion intermédiaire concave.

De plus, la surface du dioptre de sortie 4 s'étend de manière arrondie, avantageusement en portion de cercle dans un plan vertical, jusqu'à son point le plus bas, sensiblement positionné sous la source de lumière 5. Ainsi, elle s'étend vers le bas jusqu'à une extrémité sensiblement positionnée au niveau d'un plan vertical longitudinal passant par la source de lumière. Cette géométrie permet à la lentille de rabattre des rayons lumineux provenant de la source de lumière 5 sur le sol à proximité immédiate du véhicule. En complément, cette surface active du dioptre de sortie 4 se prolonge aussi sur les côtés, c'est-à-dire dans un plan horizontal, jusqu'à une ou deux extrémités sensiblement positionnées au niveau d'un plan vertical longitudinal passant par la source de lumière, pour permettre au dioptre de sortie 4 de transmettre des rayons lumineux au plus proche du véhicule automobile, dans la direction longitudinale vers l'avant et/ou l'arrière. Ainsi, la surface tridimensionnelle du dioptre de sortie 4 présente finalement deux portions convexes séparées par une portion concave. Lesdites deux portions convexes peuvent représenter sensiblement une portion de sphère.

D'autre part, la lentille 2 a été décrite selon un mode de réalisation avec une forme symétrique par rapport à un plan médian vertical. En variante, cette forme pourrait ne pas présenter de plan de symétrie. Le plan médian vertical restera défini comme le plan transversal vertical positionné sensiblement au milieu de la longueur (selon la direction longitudinale) de la lentille 2.

La figure 8 illustre plus en détail le module d'éclairage 1 destiné à être positionné à droite du véhicule 100. Un module d'éclairage identique, similaire ou symétrique pourrait être utilisé pour le côté gauche du véhicule 100. Le module d'éclairage 1 est intégré à un rétroviseur latéral 14 du véhicule 100. Outre le module d'éclairage 1, le rétroviseur latéral 14 comprend un boîtier 15 et un miroir d'observation (non représenté) permettant d'observer l'environnement à l'arrière du véhicule 100. Le boîtier 15 peut former une coque s'étendant à l'avant du miroir d'observation et supporter ce miroir d'observation. Le module d'éclairage est positionné verticalement sous le boîtier 15, notamment sous le miroir d'observation. En variante, le rétroviseur latéral peut être un e-miroir comprenant au moins une caméra, en remplacement du miroir d'observation. Le module d'éclairage peut être fixé au boîtier, lui-même fixé au véhicule 100 (par exemple à une aile du ou à une portière du véhicule 100) par l'intermédiaire d'un support 6. La longueur du boîtier (suivant l'axe longitudinal y) peut être supérieure ou égale à la longueur du module d'éclairage selon ce même axe. De même la largeur du boîtier (suivant l'axe transversal x) peut être supérieure ou égale à la largeur du module d'éclairage selon ce même axe. Ainsi, le module d'éclairage 1 peut être discrètement intégré sous le boîtier et ne dépasse pas longitudinalement ou transversalement de celui-ci.

En variante, le module d'éclairage 1 pourrait être distinct du rétroviseur latéral. Il pourrait être par exemple agencé en partie basse et latérale du véhicule 100 ou à au niveau ou à proximité du rétroviseur latéral. Il pourrait être agencé entre les deux roues du véhicule 100, à tout niveau de la caisse du véhicule 100.

Le module d'éclairage 1 comprend une source de lumière 5 et une lentille 18 agencée autour de la source de lumière 5. Le module d'éclairage comprend en outre un premier écran 111, un deuxième écran 112 et un troisième écran 113. Ces trois écrans sont agencés autour de la lentille 18 et en sont distincts. La source de lumière 5 peut être positionnée sensiblement à équidistance du premier écran et du deuxième écran.

Comme nous le verrons par la suite, le module lumineux pourrait également se trouver sans le troisième écran 113.

La source de lumière 5 peut comprendre une diode électroluminescente. Pour simplifier la description, nous considérerons par la suite la présence d'une seule source de lumière, sachant qu'elle pourrait être en pratique formée par la réunion de plusieurs sources de lumière distinctes. Cette source de lumière peut émettre toute lumière, par exemple une lumière blanche et/ou à infrarouge proche.

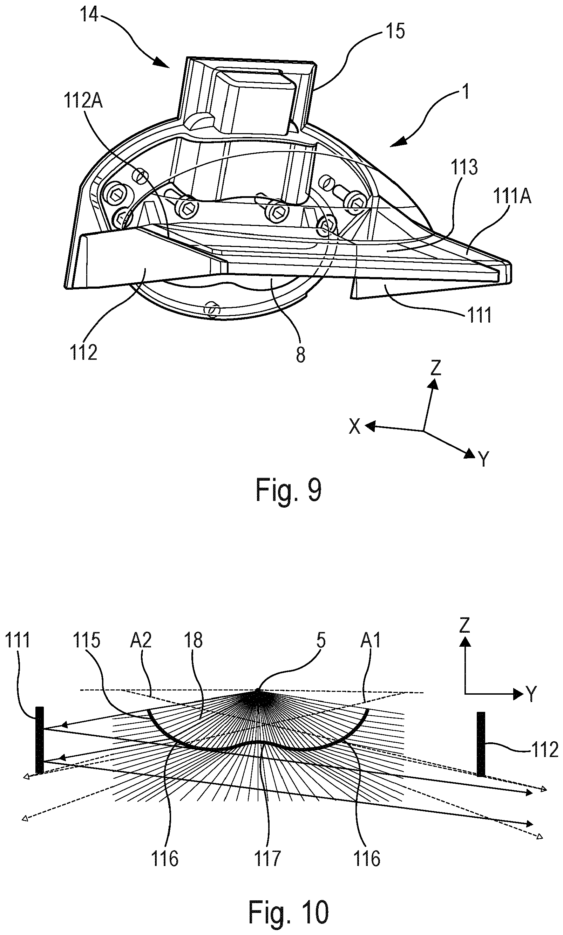

Le premier écran est positionné d'un premier côté de la source de lumière 5. Notamment, le premier écran 111 s'étend sensiblement verticalement, à l'avant de la source de lumière et à hauteur de la source de lumière. Le bas du premier écran peut s'étendre horizontalement et se trouver grossièrement à la même hauteur que le bas de la lentille 18 ou un peu plus bas que le bas de la lentille 18. Par exemple, le bas du premier écran peut se trouver quelques centimètres ou quelques millimètres en contre-bas du bas de la lentille 18. Le premier écran peut être positionné de telle sorte que des rayons émergeant depuis la lentille 18 horizontalement et vers l'avant soient bloqués ou réfléchis par le premier écran 111. Plus précisément, en ajustant la position du bas du premier écran et la distance entre le premier écran et la lentille, on peut définir la valeur d'un angle d'incidence A1 (représenté sur la figure 10) en dessous de laquelle des rayons lumineux issus de la lentille 18 sont bloqués ou réfléchis par le premier écran. Le premier écran joue donc le rôle d'un écran protégeant les automobilistes positionnés à l'avant du véhicule 100 d'un éblouissement par la source de lumière 5.

Le deuxième écran 112 est positionné d'un deuxième côté de la source de lumière 5, opposé au premier écran 111 par rapport à la source de lumière 5. De même que précédemment, le deuxième écran 112 s'étend sensiblement verticalement, à l'arrière de la source de lumière et à hauteur de la source de lumière. Le bas du deuxième écran peut s'étendre horizontalement et se trouver grossièrement à la même hauteur que le bas du premier écran. Le bas du deuxième écran peut également se trouver quelques centimètres ou quelques millimètres en contre-bas du bas de la lentille 8. Le deuxième écran peut être positionné de telle sorte que des rayons émergeant depuis la lentille 18 horizontalement et vers l'arrière soient bloqués ou réfléchis par le deuxième écran 112. Plus précisément, en ajustant la position du bas du deuxième écran et la distance entre le deuxième écran et la lentille, on peut définir la valeur d'un angle d'incidence A2 en dessous de laquelle des rayons lumineux issus de la lentille 18 sont bloqués ou réfléchis par le deuxième écran. Le deuxième écran joue donc le rôle d'un écran protégeant les automobilistes positionnés à l'arrière du véhicule 100 d'un éblouissement par la source de lumière 5.

Le troisième écran s'étend entre le premier écran 111 et le deuxième écran 112. Il s'étend sensiblement horizontalement au-dessus de la source de lumière 5, ou de manière légèrement inclinée vers le bas d'un angle entre 5 et 10 degrés relativement à un plan horizontal. Les trois écrans forment donc sensiblement trois côtés adjacents d'une boîte, ou casquette, qui recouvre la source de lumière 5 et la lentille 18. En plus de réaliser une fonction optique particulière, qui sera détaillée par la suite, les trois écrans protègent latéralement et par le dessus la source de lumière ainsi que la lentille 18 des agressions extérieures. En variante, le troisième écran pourrait ne pas être présent, par exemple si le module d'éclairage est déjà protégé par le dessus par une partie du véhicule automobile 100, et/ou si la source de lumière est configurée pour émettre de la lumière globalement dans un demi-espace orienté vers le bas. Les trois écrans peuvent être délimités par des angles matérialisant une séparation nette entre les écrans, ou bien par des profils arrondis.

Le premier écran s'étend globalement dans un premier plan vertical et transversal. De même, le deuxième écran s'étendant globalement dans un deuxième plan vertical et transversal. Comme cela apparaît sur la figure 10, le premier écran 111 et le deuxième écran peuvent donc être sensiblement parallèles entre eux. Ils peuvent être parallèle à l'axe vertical Z. Ils pourraient aussi être inclinés par rapport à l'axe vertical Z de manière à favoriser un éclairage plus ou moins vers le sol. Ils pourraient aussi être inclinés par rapport à l'axe transversal x de manière à favoriser un éclairage plus vers l'avant ou plus vers l'arrière du véhicule 100.

Le premier écran et le deuxième écran peuvent avoir des formes identiques ou similaires. Ils peuvent avoir une forme globalement rectangulaire avec un grand côté s'étendant transversalement et un petit côté s'étendant verticalement. Ils peuvent également avoir une forme globalement trapézoïdale, voire triangulaire, comme cela apparaît sur la figure 9. Les deux côtés parallèles du trapèze, formant un bord supérieur et un bord inférieur de l'écran, peuvent s'étendre sensiblement horizontalement. Le premier écran et le deuxième écran peuvent comprendre respectivement un bord supérieur 111A, 112A incliné par rapport à l'axe transversal x. Le troisième écran 113 peut s'étendre entre ces deux bords 111A et 12A. Le troisième écran est ainsi incliné vers le bas depuis le côté du véhicule 100 correspondant.

De manière générale, le bas du troisième écran peut se trouver sensiblement à la même hauteur que le bas du premier écran et du deuxième écran. Le troisième écran peut ainsi bloquer ou réfléchir des rayons émergeant horizontalement et transversalement depuis la lentille 18. De même que pour le premier écran et pour le deuxième écran, on peut ajuster la position du bas du troisième écran pour ajuster la valeur d'un angle d'incidence en dessous de laquelle des rayons lumineux issus de la lentille 18 sont bloqués ou réfléchis par le troisième écran 113.

Le premier écran 111 et/ou le deuxième écran 112 et/ou le troisième écran 113 peuvent comprendre une surface réfléchissante pour réfléchir des rayons lumineux issus de la source de lumière. Ces surfaces réfléchissantes sont aménagées sur les faces des écrans respectifs tournées vers la source de lumière 5. Lorsque le premier écran est équipé d'un telle surface réfléchissante, les rayons lumineux issus de la lentille 18 vers l'avant avec un angle d'incidence inférieur à l'angle d'incidence A1 sont réfléchis vers l'arrière. De même, lorsque le deuxième écran est équipé d'un telle surface réfléchissante, les rayons lumineux issus de la lentille 18 vers l'arrière avec un angle d'incidence inférieur à l'angle d'incidence A2 sont réfléchis vers l'avant. Enfin, lorsque le troisième écran est équipé d'un telle surface réfléchissante, les rayons lumineux issus de la lentille 18 vers la droite avec un angle d'incidence inférieur une valeur donnée sont déviés vers le bas.

On comprend donc qu'en ajustant l'orientation et la position des écrans, on peut modifier l'angle selon lequel des rayons lumineux sont réfléchis ou déviés par ces écrans. Avantageusement, au moins les deux premiers écrans sont pourvus d'une surface réfléchissante. Ainsi, tous les rayons lumineux produits par la source de lumière sont utilement utilisés pour éclairer le côté du véhicule 100. Lorsqu'un seul écran ou deux écrans seulement parmi les trois écrans comprennent une surface réfléchissante, on peut simplifier le procédé de fabrication du module d'éclairage. Les rayons lumineux qui parviendraient à un écran non pourvu de surface réfléchissante peuvent être absorbés et/ou diffusés par celui-ci.

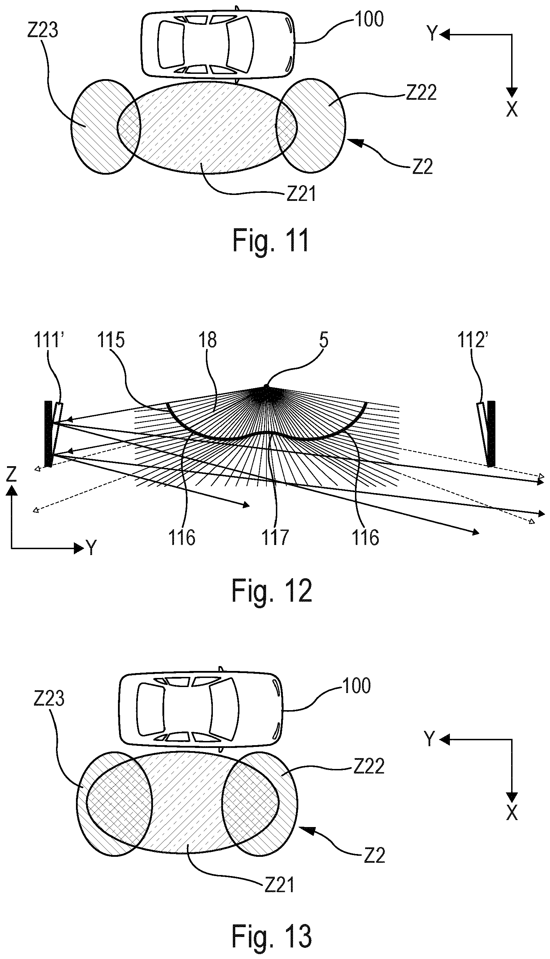

En référence à la figure 11, la zone d'éclairage Z2 obtenue par le module d'éclairage 1 du côté droit du véhicule 100 peut être décomposée en trois parties Z21, Z22, Z23. La première partie Z21, positionnée sensiblement à hauteur longitudinale du module d'éclairage est obtenue par éclairage direct, c'est-à-dire sans réflexion sur une surface réfléchissante aménagée sur le premier écran ou sur le deuxième écran. Une deuxième partie Z22, positionnée à l'avant de la première partie Z21 est obtenue par réflexion des rayons lumineux sur une surface réfléchissante aménagée sur le deuxième écran 112. Une troisième partie Z23, positionnée à l'arrière de la première partie est obtenue par réflexion des rayons lumineux sur une surface réfléchissante aménagée sur le premier écran 111.

En remarque, en fonction de l'orientation des surfaces réfléchissantes, des rayons lumineux peuvent être réfléchis successivement par la surface réfléchissante du premier écran puis par la surface réfléchissante du deuxième écran, et inversement. Toutefois, l'intensité d'un rayonnement lumineux subissant de nombreuses réflexion peut finir par baisser. Par conséquent, l'intensité d'un rayonnement lumineux émergeant quasiment horizontalement du module lumineux est très faible et ne risque pas d'éblouir d'autres automobilistes.

Comme on peut l'observer sur la figure 11, la première partie Z21 et la deuxième partie Z22 se recoupent partiellement. De même, la première partie Z21 et la troisième partie Z23 se recoupent partiellement. La forme et la position de chaque partie de la zone d'éclairage peut être ajustée en modifiant la position et la forme des surfaces réfléchissantes aménagées sur chacun des écrans.

En particulier, les figures 12 et 13 illustrent une variante de réalisation de l'invention dans laquelle les deux écrans 111' et 112' sont inclinés vers le bas par rapport à la direction verticale. Les sections verticales respectives du premier écran 111' et du deuxième écran 112' forment un angle non nul par rapport à la direction verticale, notamment un angle compris entre 0 et 50°. Les deux écrans 111', 112' forment de même entre eux un angle compris entre 0° et 50°. Les écran 111' et 112' sont inclinés vers le bas, de sorte à réfléchir les rayons incidents selon un angle qui les éloigne de l'horizontal. Les parties Z21, Z22 et Z23 de la zone d'éclairage Z2 sont alors davantage resserrées que précédemment décrit. Les parties Z22 et Z23 sont plus proches longitudinalement du module d'éclairage 3. On obtient donc une zone d'éclairage Z2 de plus faible surface mais éclairée avec une plus forte intensité que dans la configuration illustrée sur les figures 10 et 12. Un avantage d'un tel agencement des écrans 111' et 112' est de minimiser la perte d'éclairage dans les parties Z22, Z23 aux extrémités de la partie centrale Z21 de la zone d'éclairage Z2. De plus, les rayons lumineux issus de la source de lumière 5 ne risquent pas de subir plusieurs réflexions avant d'éclairer la route. Les pertes de puissance optiques sont donc minimisées.

En variante et/ou en complément de ce qui précède, la surface réfléchissante du premier écran et/ou du deuxième écran et/ou du troisième écran peuvent comprendre un ou plusieurs reliefs. Elles peuvent par exemple être de forme concave ou convexe. Elles pourraient aussi comprendre plusieurs faces (planes ou non planes) formant des angles entre elles. Ainsi, il est possible de produire des zones d'éclairage de surface variable et avec une répartition variable de l'intensité lumineuse au sein d'une zone d'éclairage. Comme nous le verrons par la suite la forme de la lentille peut aussi être ajustée pour modifier la répartition des rayons lumineux.

Le premier écran et/ou le deuxième écran et/ou le troisième écran peuvent être obtenus par injection plastique. Le premier écran 111, le deuxième écran 112 et le troisième écran 113 peuvent former un ensemble monobloc, notamment un ensemble monobloc obtenu par injection plastique. Avantageusement, le premier écran 111, le deuxième écran 112, le troisième écran 113 et le boîtier 15 peuvent former un ensemble monobloc, notamment obtenu par injection plastique. Autrement dit, les écrans 111, 112 et 113 peuvent être formés directement dans la coque du rétroviseur. Le premier écran et le deuxième écran peuvent par exemple se trouver dans le prolongement vertical des extrémités avant et arrière du boîtier 5. En remarque, lorsque le plan dans lequel s'étend le premier écran 111 forme un angle non nul avec le plan dans lequel s'étend le deuxième écran 112, le démoulage selon une direction verticale de la pièce à l'issue du procédé d'injection est facilité. En variante, les différents écrans susmentionnés peuvent former des composants distincts, assemblés entre eux par tout moyen mécanique ou autre pour les rendre solidaires.

La surface réfléchissante du premier écran et/ou la surface réfléchissante du deuxième écran et/ou la surface réfléchissante du troisième écran peuvent être obtenues par un dépôt métallique, par exemple par aluminisation. Ce procédé présente l'avantage d'être particulièrement simple à réaliser et n'engendre aucun surpoids du module d'éclairage. En variante, la ou les surfaces réfléchissantes pourraient être obtenues par l'ajout d'un miroir en tant que pièce rapportée respectivement sur le premier, et/ou le deuxième, et/ou le troisième écran.

La lentille 18 comprend un dioptre d'entrée orienté vers la source de lumière 5, et un dioptre de sortie 15. Le dioptre d'entrée est la surface de la lentille par laquelle les rayons lumineux provenant de la source de lumière 5rentrent dans la lentille. Le dioptre de sortie est la surface de la lentille par laquelle les rayons lumineux provenant de la source de lumière 5ressortent de la lentille. La lentille 18 peut présenter une forme tridimensionnelle s'approchant globalement d'une cacahuète s'étendant en longueur parallèlement à l'axe longitudinal y. La lentille 18 peut présenter une forme sensiblement symétrique par rapport à un plan transversal vertical médian.

Comme cela est visible sur les figures 10 et 12, illustrant le module d'éclairage 1 selon une coupe dans un plan vertical et longitudinal, le dioptre de sortie 115 comprend au moins une section comprenant deux portions convexe 116 séparées par une portion concave 117, vues depuis un côté opposé à la source de lumière 5. Les portions convexes 116 et concave 117 peuvent présenter une forme arrondie, notamment en portion de cercle, et/ou une succession de portions linéaires formant des angles entre elles. Ces formes particulières du dioptre d'entrée et de sortie sont conçues pour répartir idéalement les rayons lumineux dans la zone d'éclairage Z2 tout en conservant une lentille de faible encombrement.

Avantageusement, toutes les sections verticales et longitudinales des deux dioptres de la lentille 18 présenteront les mêmes caractéristiques, telles que décrite ci-dessus, sur toute leur largeur (selon l'axe transversal x) de la lentille 18. En variante, seule une partie de ces sections, s'étendant de préférence sur au moins la moitié de la largeur de la lentille 18, voire sur au moins les trois quarts de la largeur de la lentille 18, présenteront ces caractéristiques. En remarque, la section horizontale de la lentille 18, non représentée, et particulièrement du dioptre de sortie 15, présente une forme similaire à sa section verticale et longitudinale représentée.

A titre d'exemple, la distance séparant la source de lumière 5du dioptre d'entrée peut être inférieure ou égale à 10 mm, voire inférieure ou égale à 3 mm. Préférentiellement, la source de lumière 5 est accolée au dioptre d'entrée 114. Alternativement, le dioptre d'entrée 114 peut former une cavité recevant au moins partiellement la source de lumière 5. D'autre part, la lentille comprend globalement une longueur (selon l'axe y) inférieure ou égale à 50 mm, de préférence comprise entre 24 et 45 mm, une largeur (selon l'axe x) inférieure ou égale à 15 mm, de préférence comprise entre 10 et 15 mm, et une hauteur (selon l'axe z) inférieure ou égale à 20 mm, de préférence comprise entre 5 et 15 mm. La lentille se présente de préférence d'une seule pièce. Elle est monobloc. Elle peut notamment se présenter dans un matériau plastique.

Lorsque le module lumineux fonctionne, la source de lumière émet des rayons lumineux qui traversent le dioptre d'entrée, qui a une section sensiblement circulaire. Les rayons lumineux ne sont sensiblement pas déviés dans le plan longitudinal et vertical. Les rayons lumineux traversent ensuite le dioptre de sortie 115 et son déviés grâce à la forme caractéristique de ce dioptre. Les rayons lumineux qui ressortent du dioptre de sortie vers l'avant avec un angle d'incidence inférieur à l'angle A1 sont réfléchis par la surface réfléchissante du premier écran 111 et éclairent l'arrière de la zone d'éclairage Z2. De même, les rayons lumineux qui ressortent du dioptre de sortie vers l'arrière avec un angle d'incidence inférieur à l'angle A2 sont réfléchis par la surface réfléchissante du deuxième écran 112 et éclairent l'avant de la zone d'éclairage Z2. Les rayons lumineux qui n'atteignent pas les écrans 111 et 112 éclairent directement la partie centrale de la zone d'éclairage Z2.

Le module d'éclairage permet d'obtenir un éclairage homogène à une distance latérale de quelques mètres, adaptée à la mise en oeuvre de fonctions de conduite telles que présentées précédemment tout en conservant un encombrement très limité. La présence des écrans 111 et 112 permet de garantir le non éblouissement des automobilistes à l'avant et à l'arrière du véhicule 100. Autrement dit, le module lumineux est configuré de sorte que les rayons lumineux issus de la source de lumière ne peuvent pas parvenir directement à un observateur positionné à une hauteur du sol correspondant à la hauteur habituelle d'un automobiliste, par exemple entre 1m et 3m de haut par rapport au niveau du sol. Cette considération est basée sur l'hypothèse d'un sol plat et horizontal entre le véhicule 100 considéré et l'autre automobiliste. Dans les cas rares ou une route présenterait des différences de niveau importantes, les rayons issus de la source de lumière pourraient toutefois atteindre directement un automobiliste.

L'invention porte aussi sur un dispositif d'assistance à la conduite, comprenant au moins un tel module d'éclairage, afin d'éclairer la zone latérale d'un véhicule automobile 100. Ce dispositif d'assistance comprend de plus au moins une caméra pour visualiser ladite zone latérale éclairée.

Il comprend de plus une unité centrale, qui peut être un calculateur comprenant un dispositif matériel et/ou logiciel permettant d'exploiter les données transmises par ladite au moins une caméra, afin d'analyser lesdites données pour calculer et transmettre des données d'assistance à la conduite à un véhicule. Ce dispositif d'assistance remplit ainsi les fonctions de maintien sur une voie, et/ou de centrage sur une voie, et/ou de changement de voie, et/ou de freinage d'urgence, et/ou de manoeuvre d'évitement d'urgence, et/ou d'assistance au parking, et/ou de parking autonome, comme rappelé au début de la description. En complément, ce dispositif d'assistance peut participer à un pilotage automatique d'un véhicule, notamment sur autoroute, pour une fonction par exemple connue sous sa dénomination anglaise de « highway autopilot ».

L'invention porte aussi sur un procédé d'assistance à la conduite d'un véhicule automobile, notamment un véhicule autonome, comprenant les étapes suivantes :
- éclairage d'une zone latérale d'un véhicule à l'aide d'au moins un module d'éclairage tel que décrit précédemment ;
- visualisation de ladite zone latérale éclairée à l'aide d'au moins une caméra, et transmission des données visualisées de la caméra vers une unité centrale ;
- analyse des données reçues de la caméra par l'unité centrale, notamment détection d'obstacles, et déduction d'instructions d'assistance à la conduite ;
- transmission de données d'assistance à la conduite à un dispositif de conduite autonome et/ou à une interface homme machine du véhicule.

L'invention porte enfin sur un véhicule automobile, de préférence autonome, comprenant un ou plusieurs modules d'éclairage ou un dispositif d'assistance tels que décrits précédemment et agencés en partie latérale du véhicule automobile.

## Revendications

1. Module d'éclairage (1) pour l'éclairage des zones latérales d'un véhicule, **caractérisé en ce qu'**il comprend une source de lumière (5) et une lentille (2) comprenant un dioptre d'entrée (3) orienté vers la source de lumière (5) et un dioptre de sortie (4), **en ce que** le dioptre de sortie (4) comprend au moins une section par un plan horizontal comprenant deux portions convexe (6) séparées par une portion concave (7), vues depuis un côté opposé à la source de lumière (5), et **en ce que** le dioptre d'entrée (3) comprend une section par un plan médian vertical (P) présentant une portion inférieure (8) convexe et une portion supérieure (9) concave, vues depuis un côté opposé à la source de lumière (5).

2. Module d'éclairage (1) pour véhicule selon la revendication précédente, **caractérisé en ce que** lesdites portions convexes (6) et concave (7) de ladite au moins une section du dioptre de sortie (4) par un plan horizontal présentent une forme arrondie, notamment en portion de cercle, et/ou une succession de portions linéaires, notamment deux portions convexes (6) arrondies séparées par une portion concave (7) formant un angle aigu ou de faible rayon de courbure, et/ou **en ce que** lesdites portions convexe (8) et concave (9) de ladite section du dioptre d'entrée (3) par un plan médian vertical (P) présentent une forme arrondie, notamment en portion de cercle, et/ou une succession de portions linéaires.

3. Module d'éclairage (1) pour véhicule selon l'une des revendications précédentes, **caractérisé en ce que** le dioptre d'entrée (3) comprend au moins une section par un plan horizontal de forme en portion de cercle centrée sur la source de lumière (5) ou **en ce que** la surface du dioptre d'entrée (3) est formée par la rotation de ladite section par un plan médian vertical autour d'un axe de rotation vertical passant au niveau de la source de lumière (5).

4. Module d'éclairage (1) pour véhicule selon l'une des revendications précédentes, **caractérisé en ce que** le dioptre de sortie (4) comprend une section par un plan médian vertical présentant une forme au moins partiellement en portion de cercle centrée sur la source de lumière (5), ou **en ce qu'**il comprend plusieurs sections par des plans verticaux comprenant la source de lumière (5) présentant une forme au moins partiellement en portion de cercle centrée sur la source de lumière (5).

5. Module d'éclairage (1) pour véhicule selon l'une des revendications précédentes, **caractérisé en ce que** toutes les sections par un plan horizontal du dioptre de sortie (4) présentent deux portions convexes (6) séparées par une portion concave (7) ou **en ce que** les sections horizontales du dioptre de sortie (4) présentent deux portions convexes (6) séparées par une portion concave (7) sur au moins la moitié ou au moins les trois quarts de la hauteur de la lentille (2).

6. Module d'éclairage (1) pour véhicule selon l'une des revendications précédentes, **caractérisé en ce que** la surface du dioptre de sortie (4) s'étend dans au moins un plan vertical de manière arrondie, voire en portion de cercle, jusqu'à une extrémité inférieure sensiblement positionnée au niveau d'un plan vertical longitudinal passant par la source de lumière (5), et/ou **en ce que** la surface du dioptre de sortie (4) s'étend dans au moins un plan horizontal jusqu'à une ou deux extrémités sensiblement positionnées au niveau d'un plan vertical longitudinal passant par la source de lumière (5).

7. Module d'éclairage (1) pour véhicule selon l'une des revendications précédentes, **caractérisé en ce que** la lentille (2) comprend une surface supérieure réfléchissante pour réfléchir les rayons lumineux provenant de la source de lumière (5) vers l'intérieur de la lentille (2).

8. Module d'éclairage (1) pour véhicule selon l'une des revendications précédentes, **caractérisé en ce qu'**il présente une forme répartie symétriquement autour d'un plan médian vertical (P).

9. Module d'éclairage (1) pour véhicule selon l'une des revendications précédentes, **caractérisé en ce qu'**il comprend une longueur inférieure ou égale à 50 mm, voire inférieure ou égale à 45 mm, et/ou **en ce qu'**il comprend une largeur inférieure ou égale à 15 mm, voire inférieure ou égale à 13 mm, et/ou **en ce qu'**il comprend une hauteur inférieure ou égale à 20 mm, voire inférieure ou égale à 15 mm.

10. Module d'éclairage (3) pour un véhicule (1) automobile l'une des revendications précédentes, **caractérisé en ce qu'**il comprend une source de lumière (5) apte à projeter des rayons lumineux pour éclairer une zone latérale (Z2, Z3) d'un véhicule, un premier écran (111) positionné d'un premier côté de la source de lumière, un deuxième écran (112) positionné d'un deuxième côté de la source de lumière, le deuxième côté étant opposé au premier côté par rapport à la source de lumière, le premier écran (111) étant destiné à s'étendre sensiblement parallèlement à un plan vertical et transversal, à l'avant de la source de lumière et à hauteur de la source de lumière, le deuxième écran (112) étant destiné à s'étendre sensiblement parallèlement à un plan vertical et transversal, à l'arrière de la source de lumière et à hauteur de la source de lumière, le premier écran (111) comprenant une surface réfléchissante pour réfléchir des rayons lumineux issus de la source de lumière vers le deuxième côté de ladite zone latérale (Z2, Z3) et/ou le deuxième écran (112) comprenant une surface réfléchissante pour réfléchir des rayons lumineux issus de la source de lumière vers le premier côté de ladite zone latérale (Z2, Z3).

11. Module d'éclairage (3) selon la revendication précédente, **caractérisé en ce qu'**il comprend un troisième écran (113) s'étendant entre le premier écran (111) et le deuxième écran (112), le troisième écran étant destiné à s'étendre sensiblement horizontalement et au-dessus de la source de lumière (5), les trois écrans (111, 112, 113) étant agencés autour de la lentille (18) et en sont distincts.

12. Module d'éclairage (3) selon l'une des revendications précédentes, **caractérisé en ce que** le premier écran (111) s'étend globalement dans un premier plan et **en ce que** le deuxième écran (112) s'étend globalement dans un deuxième plan, le premier plan et le deuxième plan formant un angle non nul, notamment un angle compris entre 0° et 50°, les trois écrans (111, 112, 113) étant agencés autour de la lentille (18) et en sont distincts.

13. Module d'éclairage (3) selon l'une des revendications précédentes, **caractérisé en ce que** le premier écran (111) et le deuxième écran (112) sont obtenus par injection plastique.

14. Module d'éclairage (3) selon l'une des revendications précédentes, **caractérisé en ce que** la surface réfléchissante du premier écran (111) et/ou la surface réfléchissante du deuxième écran (112) est obtenue par un dépôt métallique, notamment par aluminisation.

15. Module d'éclairage (3) selon l'une des revendications précédentes, **caractérisé en ce que** la surface réfléchissante du premier écran (111) et/ou la surface réfléchissante du deuxième écran (112) comprend un ou plusieurs reliefs.

16. Rétroviseur latéral (14) pour un véhicule (100) automobile, **caractérisé en ce qu'**il comprend un module d'éclairage (3) selon l'une des revendications précédentes, le rétroviseur latéral comprenant un miroir d'observation ou une caméra pour permettre à un conducteur de visualiser la zone à l'arrière d'un véhicule automobile, le module d'éclairage étant positionné verticalement sous le miroir d'observation ou sous la caméra.

17. Rétroviseur latéral (14) selon la revendication précédente, **caractérisé en ce qu'**il comprend un boîtier (15) supportant le miroir d'observation, la longueur du boîtier étant supérieure ou égale à la longueur du module d'éclairage (3) et/ou la largeur du boîtier étant supérieure ou égale à la largeur du module d'éclairage (3).

18. Rétroviseur latéral selon l'une des revendications 16 ou 17, **caractérisé en ce qu'**il comprend un boîtier (15) supportant le miroir d'observation, le boîtier formant avec le premier écran (111) et/ou avec le deuxième écran (112) un ensemble monobloc.

19. Dispositif d'assistance à la conduite, **caractérisé en ce qu'**il comprend au moins un module d'éclairage (3) selon l'une des revendications 1 à 15 et/ou un rétroviseur latéral (14) selon l'une des revendication 16 à 18, le dispositif d'assistance à la conduite comprenant au moins une caméra pour visualiser ladite zone latérale éclairée, une unité centrale comprenant un dispositif matériel et/ou logiciel exploitant les données transmises par ladite au moins une caméra pour calculer et transmettre des données d'assistance à la conduite à un véhicule.

20. Véhicule (100) automobile, notamment autonome ou semi-autonome, **caractérisé en ce qu'**il comprend un ou plusieurs modules d'éclairage (3) selon l'une des revendications 1 à 15, agencés en partie basse et latérale du véhicule automobile ou au niveau d'un rétroviseur latéral du véhicule, ou **en ce qu'**il comprend un rétroviseur latéral (14) selon l'une des revendications 16 à 18, ou **en ce qu'**il comprend un dispositif d'assistance à la conduite selon la revendication précédente.

21. Procédé d'assistance à la conduite d'un véhicule automobile, **caractérisé en ce qu'**il comprend les étapes suivantes :
- Eclairage d'une zone latérale d'un véhicule à l'aide d'au moins un module d'éclairage (1) selon l'une des revendications 1 à 15, agencé(s) en partie latérale du véhicule automobile ;
- Visualisation de ladite zone latérale éclairée à l'aide d'au moins une caméra agencée sur le véhicule automobile, et transmission des données visualisées par la caméra vers une unité centrale du véhicule automobile ;
- Analyse desdites données reçues par l'unité centrale, notamment détection d'obstacles, et déduction d'instructions d'assistance à la conduite ;
- Transmission de données d'assistance à la conduite à un dispositif de conduite autonome et/ou à une interface homme machine du véhicule automobile.

## Patentansprüche

1. Beleuchtungsmodul (1) zur Beleuchtung der seitlichen Bereiche eines Fahrzeugs, **dadurch gekennzeichnet, dass** es eine Lichtquelle (5) und eine ein zur Lichtquelle (5) hin ausgerichtetes Eintrittsdiopter (3) und ein Austrittsdiopter (4) umfassende Linse (2) umfasst, dadurch, dass das Austrittsdiopter (4) mindestens einen Schnitt entlang einer horizontalen Ebene umfasst, der, von einer der Lichtquelle (5) gegenüberliegenden Seite aus gesehen, zwei durch einen konkaven Abschnitt (7) getrennte konvexe Abschnitte (6) umfasst, und dadurch, dass das Eintrittsdiopter (3) einen Schnitt entlang einer vertikalen Mittelebene (P) umfasst, der, von einer der Lichtquelle (5) gegenüberliegenden Seite aus gesehen, einen konvexen unteren Abschnitt (8) und einen konkaven oberen Abschnitt (9) aufweist.

2. Beleuchtungsmodul (1) für ein Fahrzeug nach dem vorhergehenden Anspruch, **dadurch gekennzeichnet, dass** die konvexen Abschnitte (6) und der konkave Abschnitt (7) des mindestens einen Schnitts des Austrittsdiopters (4) entlang einer horizontalen Ebene eine gerundete Form, insbesondere die von Kreisabschnitten, und/oder eine Folge von linearen Abschnitten aufweisen, insbesondere zwei durch einen konkaven Abschnitt (7) getrennte gerundete konvexe Abschnitte (6), die einen spitzen Winkel oder Übergang mit kleinem Krümmungsradius bilden, und/oder dadurch, dass der konvexe (8) und der konkave Abschnitt (9) des Schnitts des Eintrittsdiopters (3) entlang einer vertikalen Mittelebene (P) eine gerundete Form, insbesondere die von Kreisabschnitten, und/oder eine Folge von linearen Abschnitten aufweisen.

3. Beleuchtungsmodul (1) für ein Fahrzeug nach einem der vorhergehenden Ansprüche, **dadurch gekennzeichnet, dass** das Eintrittsdiopter (3) mindestens einen Schnitt entlang einer horizontalen Ebene von der Form eines auf der Lichtquelle (5) zentrierten Kreisabschnitts umfasst, und/oder dadurch, dass die Oberfläche des Eintrittsdiopters (3) durch die Rotation des Schnitts entlang einer vertikalen Mittelebene um eine an der Lichtquelle (5) verlaufende Achse gebildet wird.

4. Beleuchtungsmodul (1) für ein Fahrzeug nach einem der vorhergehenden Ansprüche, **dadurch gekennzeichnet, dass** das Austrittsdiopter (4) einen Schnitt entlang einer vertikalen Mittelebene umfasst, der eine Form aufweist, die wenigstens teilweise die eines auf der Lichtquelle (5) zentrierten Kreisabschnitts ist, oder dadurch, dass es mehrere Schnitte entlang die Lichtquelle (5) umfassender vertikaler Ebenen umfasst, die eine Form aufweisen, die wenigstens teilweise die eines auf der Lichtquelle (5) zentrierten Kreisabschnitts ist.

5. Beleuchtungsmodul (1) für ein Fahrzeug nach einem der vorhergehenden Ansprüche, **dadurch gekennzeichnet, dass** alle Schnitte des Austrittsdiopters (4) entlang einer horizontalen Ebene zwei durch einen konkaven Abschnitt (7) getrennte konvexe Abschnitte (6) aufweisen, oder dadurch, dass die horizontalen Schnitte des Austrittsdiopters (4) zwei durch einen konkaven Abschnitt (7) getrennte konvexe Abschnitte (6) auf wenigstens der Hälfte oder wenigstens drei Vierteln der Höhe der Linse (2) aufweisen.

6. Beleuchtungsmodul (1) für ein Fahrzeug nach einem der vorhergehenden Ansprüche, **dadurch gekennzeichnet, dass** sich die Oberfläche des Austrittsdiopters (4) in mindestens einer vertikalen Ebene abgerundet oder sogar kreisabschnittförmig bis zu einem unteren Ende erstreckt, das im Wesentlichen an einer durch die Lichtquelle (5) verlaufenden vertikalen Längsebene positioniert ist, und/oder dadurch, dass sich die Oberfläche des Austrittsdiopters (4) in mindestens einer horizontalen Ebene bis zu einem oder zwei Enden erstreckt, die im Wesentlichen an einer durch die Lichtquelle (5) verlaufenden vertikalen Längsebene positioniert sind.

7. Beleuchtungsmodul (1) für ein Fahrzeug nach einem der vorhergehenden Ansprüche, **dadurch gekennzeichnet, dass** die Linse (2) eine reflektierende obere Fläche umfasst, um die von der Lichtquelle (5) kommenden Lichtstrahlen in Richtung des Inneren der Linse (2) zu reflektieren.

8. Beleuchtungsmodul (1) für ein Fahrzeug nach einem der vorhergehenden Ansprüche, **dadurch gekennzeichnet, dass** es eine Form aufweist, die symmetrisch um eine vertikale Mittelebene (P) verteilt ist.

9. Beleuchtungsmodul (1) für ein Fahrzeug nach einem der vorhergehenden Ansprüche, **dadurch gekennzeichnet, dass** es eine Länge aufweist, die kleiner oder gleich 50 mm oder sogar kleiner oder gleich 45 mm ist, und/oder dadurch, dass es eine Breite aufweist, die kleiner oder gleich 15 mm oder sogar kleiner oder gleich 13 mm ist, und/oder dadurch, dass es eine Höhe aufweist, die kleiner oder gleich 20 mm oder sogar kleiner oder gleich 15 mm ist.

10. Beleuchtungsmodul (3) für ein Kraftfahrzeug (1) nach einem der vorhergehenden Ansprüche, **dadurch gekennzeichnet, dass** es eine Lichtquelle (5), die in der Lage ist, Lichtstrahlen zu projizieren, um einen seitlichen Bereich (Z2, Z3) eines Fahrzeugs zu beleuchten, einen ersten Schirm (111), der auf einer ersten Seite der Lichtquelle positioniert ist, und einen zweiten Schirm (112), der auf einer zweiten Seite der Lichtquelle positioniert ist, wobei die zweite Seite der ersten Seite in Bezug auf die Lichtquelle gegenüberliegt, umfasst, wobei der erste Schirm (111) dazu bestimmt ist, sich im Wesentlichen parallel zu einer vertikalen und quer verlaufenden Ebene vor der Lichtquelle und auf der Höhe der Lichtquelle zu erstrecken, wobei der zweite Schirm (112) dazu bestimmt ist, sich im Wesentlichen parallel zu einer vertikalen und quer verlaufenden Ebene hinter der Lichtquelle und auf der Höhe der Lichtquelle zu erstrecken, wobei der erste Schirm (111) eine reflektierende Fläche umfasst, um von der Lichtquelle ausgehende Lichtstrahlen in Richtung der zweiten Seite des seitlichen Bereichs (Z2, Z3) zu reflektieren, und/oder wobei der zweite Schirm (112) eine reflektierende Fläche umfasst, um von der Lichtquelle ausgehende Lichtstrahlen in Richtung der ersten Seite des seitlichen Bereichs (Z2, Z3) zu reflektieren.

11. Beleuchtungsmodul (3) nach dem vorhergehenden Anspruch, **dadurch gekennzeichnet, dass** es einen dritten Schirm (113) umfasst, der sich zwischen dem ersten Schirm (111) und dem zweiten Schirm (112) erstreckt, wobei der dritte Schirm dazu bestimmt ist, sich im Wesentlichen horizontal und über der Lichtquelle (5) zu erstrecken, wobei die drei Schirme (111, 112, 113) um die Linse (18) herum angeordnet sind und von ihr verschieden sind.

12. Beleuchtungsmodul (3) nach einem der vorhergehenden Ansprüche, **dadurch gekennzeichnet, dass** sich der erste Schirm (111) im Wesentlichen in einer ersten Ebene erstreckt, und dadurch, dass sich der zweite Schirm (112) im Wesentlichen in einer zweiten Ebene erstreckt, wobei die erste Ebene und die zweite Ebene einen von null verschiedenen Winkel bilden, insbesondere einen Winkel zwischen 0° und 50°, wobei die drei Schirme (111, 112, 113) um die Linse (18) herum angeordnet sind und von ihr verschieden sind.

13. Beleuchtungsmodul (3) nach einem der vorhergehenden Ansprüche, **dadurch gekennzeichnet, dass** der erste Schirm (111) und der zweite Schirm (112) durch Spritzgießen erhalten werden.

14. Beleuchtungsmodul (3) nach einem der vorhergehenden Ansprüche, **dadurch gekennzeichnet, dass** die reflektierende Fläche des ersten Schirmes (111) und/oder die reflektierende Fläche des zweiten Schirmes (112) durch eine Metallabscheidung erhalten werden, insbesondere durch Aluminisierung.

15. Beleuchtungsmodul (3) nach einem der vorhergehenden Ansprüche, **dadurch gekennzeichnet, dass** die reflektierende Fläche des ersten Schirmes (111) und/oder die reflektierende Fläche des zweiten Schirmes (112) ein oder mehrere Reliefs umfassen.

16. Seitenrückspiegel (14) für ein Kraftfahrzeug (100), **dadurch gekennzeichnet, dass** er ein Beleuchtungsmodul (3) nach einem der vorhergehenden Ansprüche umfasst, wobei der Seitenrückspiegel einen Beobachtungsspiegel oder eine Kamera umfasst, um einem Fahrer zu ermöglichen, den Bereich hinter einem Kraftfahrzeug zu visualisieren, wobei das Beleuchtungsmodul vertikal unter dem Beobachtungsspiegel oder unter der Kamera positioniert ist.

17. Seitenrückspiegel (14) nach dem vorhergehenden Anspruch, **dadurch gekennzeichnet, dass** er ein Gehäuse (15) umfasst, das den Beobachtungsspiegel trägt, wobei die Länge des Gehäuses größer oder gleich der Länge des Beleuchtungsmoduls (3) ist und/oder die Breite des Gehäuses größer oder gleich der Breite des Beleuchtungsmoduls (3) ist.

18. Seitenrückspiegel nach einem der Ansprüche 16 oder 17, **dadurch gekennzeichnet, dass** er ein Gehäuse (15) umfasst, das den Beobachtungsspiegel trägt, wobei das Gehäuse mit dem ersten Schirm (111) und/oder mit dem zweiten Schirm (112) eine einstückige Einheit bildet.

19. Fahrerassistenzvorrichtung, **dadurch gekennzeichnet, dass** sie mindestens ein Beleuchtungsmodul (3) nach einem der Ansprüche 1 bis 15 und/oder einen Seitenrückspiegel (14) nach einem der Ansprüche 16 bis 18 umfasst, wobei die Fahrerassistenzvorrichtung mindestens eine Kamera, um den beleuchteten seitlichen Bereich zu visualisieren, und eine Zentraleinheit umfasst, die eine Hardware- und/oder Softwarevorrichtung umfasst, welche die von der mindestens einen Kamera übertragenen Daten auswertet, um Fahrerassistenzdaten zu berechnen und zu einem Fahrzeug zu übertragen.

20. Kraftfahrzeug (100), insbesondere autonomes oder halbautonomes Kraftfahrzeug, **dadurch gekennzeichnet, dass** es ein oder mehrere Beleuchtungsmodule (3) nach einem der Ansprüche 1 bis 15 umfasst, die im unteren und seitlichen Teil des Kraftfahrzeugs oder an einem Seitenrückspiegel des Fahrzeugs angeordnet sind, oder dadurch, dass es einen Seitenrückspiegel (14) nach einem der Ansprüche 16 bis 18 umfasst, oder dadurch, dass es eine Fahrerassistenzvorrichtung nach dem vorhergehenden Anspruch umfasst.

21. Fahrerassistenzverfahren eines Kraftfahrzeugs, **dadurch gekennzeichnet, dass** es die folgenden Schritte umfasst:
- Beleuchtung eines seitlichen Bereichs eines Fahrzeugs mithilfe mindestens eines Beleuchtungsmoduls (1) nach einem der Ansprüche 1 bis 15, das im seitlichen Teil des Kraftfahrzeugs angeordnet ist;
- Visualisierung des beleuchteten seitlichen Bereichs mithilfe mindestens einer am Kraftfahrzeug angeordneten Kamera und Übertragung der von der Kamera visualisierten Daten zu einer Zentraleinheit des Kraftfahrzeugs;
- Analyse der empfangenen Daten durch die Zentraleinheit, insbesondere Erkennung von Hindernissen, und Ableitung von Fahrerassistenzanweisungen;
- Übertragung von Fahrerassistenzdaten zu einer autonomen Fahrvorrichtung und/oder zu einer Mensch-Maschine-Schnittstelle des Kraftfahrzeugs.

## Claims

1. A lighting module (1) for Illuminating a lateral area of a vehicle, **characterized in that** the lighting module comprises a light source (5) and a lens (2) comprising an entry diopter (3) oriented toward the light source (5) and an exit diopter (4), **in that** the exit diopter (4) comprises at least one section through a horizontal plane comprising two convex portions (6) separated by a concave portion (7), when viewed from a side opposite the light source (5), and **in that** the entry diopter (3) comprises a section through a vertical median plane (P) having a convex lower portion (8) and a concave upper portion (9) when viewed from a side opposite the light source (5).

2. The lighting module (1) for a vehicle as claimed in the preceding claim, **characterized in that** said convex portions (6) and concave portion (7) of said at least one section of the exit diopter (4) through a horizontal plane have a rounded shape, in particular in the form of a portion of a circle, and/or a succession of linear portions, in particular two rounded convex portions (6) separated by a concave portion (7) forming an acute angle or having a small radius of curvature, and/or **in that** said convex portions (8) and concave portion (9) of said section of the entry diopter (3) through a vertical median plane (P) have a rounded shape, in particular in the form of a portion of a circle, and/or a succession of linear portions.

3. The lighting module (1) for a vehicle as claimed in either of the preceding claims, **characterized in that** the entry diopter (3) comprises at least one section through a horizontal plane in the form of a portion of a circle centered on the light source (5) or **in that** the surface of the entry diopter (3) is formed by the rotation of said section through a vertical median plane about a vertical axis of rotation passing through the light source (5).

4. The lighting module (1) for a vehicle as claimed in one of the preceding claims, **characterized in that** the exit diopter (4) comprises a section through a vertical median plane having a shape at least partially in the form of a portion of a circle centered on the light source (5), or **in that** it comprises multiple sections through vertical planes comprising the light source (5) having a shape at least partially in the form of a portion of a circle centered on the light source (5).

5. The lighting module (1) for a vehicle as claimed in one of the preceding claims, **characterized in that** all the sections through a horizontal plane of the exit diopter (4) have two convex portions (6) separated by a concave portion (7) or **in that** the horizontal sections of the exit diopter (4) have two convex portions (6) separated by a concave portion (7) over at least half or at least three quarters of the height of the lens (2).

6. The lighting module (1) for a vehicle as claimed in one of the preceding claims, **characterized in that** the surface of the exit diopter (4) extends in at least one vertical plane in a rounded manner, or even in the form of a portion of a circle, as far as a lower end substantially positioned in a longitudinal vertical plane passing through the light source (5), and/or **in that** the surface of the exit diopter (4) extends in at least one horizontal plane as far as one or two ends substantially positioned in a longitudinal vertical plane passing through the light source (5).

7. The lighting module (1) for a vehicle as claimed in one of the preceding claims, **characterized in that** the lens (2) comprises a reflective upper surface for reflecting the light rays coming from the light source (5) into the lens (2).

8. The lighting module (1) for a vehicle as claimed in one of the preceding claims, **characterized in that** the lighting module has a shape distributed symmetrically about a vertical median plane (P).

9. The lighting module (1) for a vehicle as claimed in one of the preceding claims, **characterized in that** the lighting module has a length of less than or equal to 50 mm, or even less than or equal to 45 mm, and/or **in that** it has a width of less than or equal to 15 mm, or even less than or equal to 13 mm, and/or **in that** it has a height of less than or equal to 20 mm, or even less than or equal to 15 mm.

10. The lighting module (1) for a motor vehicle (100) one of the preceding claims, **characterized in that** the lighting module comprises a light source (5) able to project light rays so as to illuminate a lateral area (Z2, Z3) of a vehicle, a first screen (111) positioned on a first side of the light source, a second screen (112) positioned on a second side of the light source, the second side being opposite the first side with respect to the light source, the first screen (111) being intended to extend substantially parallel to a vertical and transverse plane, in front of the light source and at the height of the light source, the second screen (112) being intended to extend substantially parallel to a vertical and transverse plane, behind the light source and at the height of the light source, the first screen (111) comprising a reflective surface for reflecting light rays coming from the light source toward the second side of said lateral area (Z2, Z3) and/or the second screen (112) comprising a reflective surface for reflecting light rays coming from the light source toward the first side of said lateral area (Z2, Z3).

11. The lighting module (1) as claimed in the preceding claim, **characterized in that** the lighting module comprises a third screen (113) extending between the first screen (111) and the second screen (112), the third screen being intended to extend substantially horizontally and above the light source (5).

12. The lighting module (1) as claimed in one of the preceding claims, **characterized in that** the first screen (111) extends overall in a first plane and **in that** the second screen (112) extends overall in a second plane, the first plane and the second plane forming a non-zero angle, in particular an angle of between 0° and 50°.

13. The lighting module (1) as claimed in one of the preceding claims, **characterized in that** the first screen (111) and the second screen (112) are obtained by plastics injection molding.

14. The lighting module (1) as claimed in one of the preceding claims, **characterized in that** the reflective surface of the first screen (111) and/or the reflective surface of the second screen (112) are/is obtained by metal deposition, in particular by aluminization.

15. The lighting module (1) as claimed in one of the preceding claims, **characterized in that** the reflective surface of the first screen (111) and/or the reflective surface of the second screen (112) comprise(s) one or more reliefs.

16. A lateral rear-view mirror (14) for a motor vehicle (100), **characterized in that** it comprises a lighting module (1) as claimed in one of the preceding claims, the lateral rear-view mirror comprising an observation mirror or a camera so as to allow a driver to view the area behind a motor vehicle, the lighting module being positioned vertically below the observation mirror or below the camera.

17. The lateral rear-view mirror (14) as claimed in the preceding claim, **characterized in that** it comprises a casing (15) supporting the observation mirror, the length of the casing being greater than or equal to the length of the lighting module (1) and/or the width of the casing being greater than or equal to the width of the lighting module (3).

18. The lateral rear-view mirror as claimed in either of claims 16 and 17, **characterized in that** it comprises a casing (15) supporting the observation mirror, the casing forming a one-piece assembly with the first screen (111) and/or with the second screen (112).

19. A driving assistance device, **characterized in that** it comprises at least one lighting module (1) as claimed in one of claims 1 to 15 and/or a lateral rear-view mirror (14) as claimed in one of claims 16 to 18, the driving assistance device comprising at least one camera for viewing said illuminated lateral area, a central unit comprising a hardware and/or software device utilizing the data transmitted by said at least one camera to calculate driving assistance data and transmit them to a vehicle.

20. A motor vehicle (100), in particular an autonomous or semi-autonomous motor vehicle, **characterized in that** it comprises one or more lighting modules (1) as claimed in one of claims 1 to 15, arranged in the lower and lateral part of the motor vehicle or at a lateral rear-view mirror of the vehicle, or **in that** it comprises a lateral rear-view mirror (14) as claimed in one of claims 16 to 18, or **in that** it comprises a driving assistance device as claimed in the preceding claim.

21. A method for assisting with the driving of a motor vehicle, **characterized in that** it comprises the following steps:
- Illuminating a lateral area of a vehicle using at least one lighting module (1) as claimed in one of claims 1 to 15, arranged in the lateral part of the motor vehicle;
- Viewing said illuminated lateral area using at least one camera arranged on the motor vehicle, and transmitting the data viewed by the camera to a central unit of the motor vehicle;
- Analyzing said data received by the central unit, in particular detecting obstacles, and deducing driving assistance instructions;
- Transmitting driving assistance data to an autonomous driving device and/or to a man-machine interface of the motor vehicle.
